# EUROPEAN PATENT APPLICATION

(11) **EP 3 901 358 A1**
(43) Date of publication of application: **27.10.2021**
(21) Application number: 21170013.3
(22) Date of filing: 22.04.2021
(51) Int. Cl.: D06M 11/74, D06M 16/00, D06M 23/08, A41D 13/11

(54) **FLAT FIBROUS PRODUCT.**

(30) Priority: 23.04.2020 IT 202000008734
(71) Applicant: GAAP Technology OÜ, 10141 Tallinn (EE)
(72) Inventor: CAPODICASA, Alessandro, 96100 Siracusa (IT)
(74) Representative: Braidotti, Andrea

(57) **Abstract**

Laminar product (1), in particular for the production of a mask (7) for the protection of the respiratory tract, for garments, sheets and linen in general, characterized in that it comprises at least one layer (2) of fabric having at least a part of its fibers coated at least in part, preferably entirely, by nano-particles (4) comprising at least one nano-cluster, preferably a nano-cluster agglomerate, of carbon-based material having a face-centered cubic-type structure (*fcc*)*.*

## Description

The present invention relates to a laminar product, in particular for the production of a mask for protecting the respiratory tract and/or clothing, sheets and linen in general, preferably for hospital use.

To protect the respiratory tract from dust, smog and from particulates generally present in the air, as well as from bacteria and/or other contaminants and pathogens present in the air, protective masks are used, also called half-masks or filtering facial devices, identified with the code "FF" or as medical devices. In particular, the masks are generally configured to be applied in front of the mouth and nose, thus covering part of the face of the person wearing them.

Generally, among the known masks, there are those made entirely and exclusively with one or more layers of filtering fabric, such as for example those anti-dust or FFP1 type according to the classification provided by the European standard UNI EN 149 and the "medical" ones (so-called " surgical ") considered as a class 1 medical device in accordance with the provisions of Directive 93/42 EEC; however, these masks have a rather poor filtering efficiency, generally around 78%, and therefore are not particularly suitable for protecting the respiratory tract of the wearer of the mask itself from bacteria present in the surrounding environment.

Masks with higher filtering efficiency are also known - classified as FFP2 or FFP3 type, and having respectively 92% and 98% filtering efficiency - which on the one hand allow suitable protection of the respiratory tract of the wearer of the mask itself, but from other are currently rather complicated and expensive to produce.

Furthermore, at present, the known masks, of all the aforesaid types, have a limited storage time and are generally of the disposable type and, in particular, must be replaced and thrown away after their use. Therefore, the use of disposable masks inevitably requires a greater supplying frequency, and also requires managing their disposal, once they have been used.

CN106758231 discloses antibacterial protective gloves made of a woven fiber based on cotton and bamboo. Said fabric is soaked with fullerenes or other nano-particles to ensure an antibacterial effect to the fabric itself.

US7862624 discloses a fabric comprising an antimicrobial compound, for example fullerenes or nano-threads based on fullerenes.

However, these solutions are not fully satisfactory since the antibacterial action of the fullerenes is poor, and they are not able to effectively protect the user.

KR 20130006133 describes a fabric coated with carbon-based material, for example carbon black, carbon fibers or carbon nano-tubes.

US 2020102697 discloses a fabric in which carbon nano-tubes are dispersed.

However, even these solutions are not fully satisfactory since the antibacterial action of these carbon-based compounds, and in particular of the carbon nano-tubes, is poor, and they are not able to effectively protect the user.

US2015204009 discloses a polymeric fiber-based fabric bonded to carbon-based nano-particles with the surface functionalized with aryl groups to facilitate its adhesion to the polymeric fibers.

However, even this solution is not fully satisfactory as the particles used do not have an antibacterial function.

CN108425238 describes a non-woven fabric to which graphene is added, in order to provide it with antibacterial properties.

However, even this solution is not fully satisfactory as the antibacterial action of graphene is poor, and they are not able to effectively protect the user.

The object of the invention is to propose an improved product, to be used in particular for the production of a mask for protecting the respiratory tract, which solves the drawbacks present in traditional solutions.

Another object of the invention is to propose a product which has a high filtering efficiency, therefore being suitable for use to make respiratory protection masks.

Another object of the invention is to propose a product which is both flexible and resistant.

Another object of the invention is to propose a product which has a high filtering efficiency to the particulates present in the air.

Another object of the invention is to propose a product which has a high filtering efficiency to bacteria and/or other contaminants and pathogens present in the air.

Another object of the invention is to propose a product which is antimicrobial and/or bacteriostatic, and which in particular defines an effective barrier for bacteria.

Another purpose of the invention is to propose a product that is highly eco-compatible.

Another object of the invention is to propose a product that has an alternative and/or improved characterization, both in constructive and functional terms, with respect to traditional ones.

Another object of the invention is to propose a product which can be obtained simply, quickly and with low costs.

Another object of the invention is to propose a respiratory protection mask that is comfortable to use.

Another object of the invention is to propose a respiratory protection mask that can be reused several times.

Another object of the invention is to propose a respiratory protection mask with a high *shelf-life.*

Another object of the invention is to propose a respiratory protection mask that exploits the potential of innovative products.

Another object of the invention is to propose a respiratory protection mask which has an alternative and/or improved characterization, both in constructive and functional terms, with respect to the traditional ones.

Another object of the invention is to propose a respiratory protection mask which can be obtained simply, quickly and with low costs.

All these purposes, both individually and in any combination thereof, and others that will result from the following description, are achieved, according to the invention, with a mask with the characteristics indicated in claim 1.

The present invention is further clarified hereinafter in some of its preferred embodiments reported for purely illustrative and non-limiting purposes with reference to the attached drawing tables, in which:
- Figure 1: shows from above the fabric layer of the product according to the invention
- Figure 2: schematically shows the product according to the invention, sectioned through its thickness,
- Figure 3: shows a schematic view of the production process of the product according to the invention, and
- Figure 4: shows a front view of a template made with the product according to the invention,
- Figure 5: shows a side perspective view of the mask of fig. 4,
- figure 6: shows in perspective view a subject wearing a mask according to the invention.

As can be seen from the figures, the laminar product 1 according to the invention - in particular for the production of a mask 7 for protecting the respiratory tract, but also for clothing, sheets and linen in general - comprises at least one layer 2 of fabric in which the its fibers of said fabric are coated at least in part, preferably entirely, by nano-particles 4 of carbon-based material.

Conveniently, the fabric layer 2 is impregnated with said nano-particles 4 of carbon-based material, preferably in a weight% of 0.1-0.8% on the weight of the fabric layer 2.

Preliminarily, it should be noted that the term "laminar product" here refers to a product in which the extension of the thickness is much smaller than that of the other two dimensions (length and width). Preferably, the laminar product 1 according to the invention is flexible.

Conveniently, in the product 1, said layer 2 acts as a support layer (substrate) for the nano-particles 4 of carbon-based material.

Preferably, said fabric layer 2 comprises a fabric obtained by weaving and/or a fabric obtained by knitting and/or a non-woven fabric (TNT, i.e. with fibers joined together, even in a disordered way, by means of various systems, e.g. mechanical, hydrodynamic, aerodynamic, etc.). In particular, said fabric layer 2 can comprise natural vegetable, animal or synthetic fibers, or any combination thereof. Conveniently, the layer 2 can comprise at least one area of fabric obtained by weaving threads, and/or an area of fabric obtained by knitting and/or an area of non-woven fabric (TNT).

More in detail, the woven layer 2 can be made of cotton fibers, for example of the Supima®type, or, more preferably of the *"Ring Spun"* type, which allows to obtain a more stable and lasting association between the fabric and the nano-particles 4. Alternatively, the layer 2 can be made of silk or linen, or of polyester or nylon.

Conveniently, the laminar product 1 can comprise both a fabric layer 2 and at least two - preferably a plurality of - fabric layers 2, superimposed on each other, and preferably joined together by sewing, or by glues, or by infrared welding or ultrasound. Conveniently, said multiple overlapping and joined layers 2 can be of a different type, ie there can be a layer obtained by weaving threads, and/or a layer obtained by weaving a knit and/or a layer of non-woven fabric (TNT).

Preferably, the fabric layer 2 can have a thickness of about 0.6 - 1.2 mm. Conveniently, the fabric layer 2 can have a weight ranging from a few grams/m² to about 300 grams/m².

Conveniently, the fabric layer 2 can have about 10 - 100 threads/cm, preferably about 30 - 60 threads/cm.

Advantageously, the fabric layer 2 can have a mesh gap (ie the distance between the threads) of about 0.2 - 1.5 µm.

Conveniently, the fabric layer 2 may have been preliminarily subjected to a dyeing step, to thus give it the desired color.

Conveniently, seams can be obtained/applied on the fabric layer 2.

Conveniently, the nano-particles 4 of carbon-based material can comprise nano-clusters of carbon-based material. Preferably, the nano-clusters of carbon-based material may not comprise graphene, fullerenes or carbon nano-tubes.

Conveniently, the nano-particles 4 of carbon-based material, and in particular the nano-clusters of carbon-based material, can comprise oxidized carbon. In particular, by oxidized carbon here we mean carbon having a positive charge, at least partially. Conveniently, the carbon-based nano-compounds preferably comprise, on the surface, a plurality of functional groups, preferably including oxygen or nitrogen, which increase their solubility and/or modify their chemical and physical properties, for example allowing their grafting (ie the formation of a chemical bond) on the surface of the fibers that form the fabric layer 2. Furthermore, said functional groups can conveniently modify their antioxidant and/or bacteriostatic and/or antimicrobial properties.

In a preferred embodiment, the nano-particles 4 of carbon-based material can comprise nano-clusters of carbon-based material.

Advantageously as, nano-clusters of carbon-based material are meant agglomerates of predefined numbers of carbon atoms having a determined geometric shape, possibly not regular. In particular, for example, said nano-clusters of carbon-based material can comprise a number of atoms and preferably a number of carbon atoms, equal to 38 or equal to 75, or equal to 101. Preferably the atoms can be positioned according to a substantially face-centered cubic lattice (*fcc*)*.*

Conveniently, the nano-clusters of carbon-based material can have a substantially truncated octahedral or decahedral shape. In particular, if they are composed of 38 atoms, they can have a truncated octahedral shape. In particular, if they are composed of 75 atoms they can have a decahedral shape, and preferably the shape of a Marks' decahedron, and more preferably a Marks' decahedron having values of m, n, and p equal to 2, 2 and 2. In particular, if they are composed of 101 atoms, they can have a decahedral shape, and preferably the shape of a Marks' decahedron, and more preferably a Marks' decahedron having values of m, n, and p respectively equal to 2, 3 and 2. With values of m, n, and p we mean, in the traditional way, the parameters that describe the shape of the decahedron, and, in particular, with m we mean the dimension of the horizontal side - i.e. the one adjacent to the face (111) of the decahedron - of the face (100) of the decahedron, to the vertical side - ie the one adjacent to another face (100) of the decahedron - of the face (100) of the decahedron, and p is the so-called Marks' recess.

Preferably, the nano-clusters of carbon-based material may not comprise a number of atoms, and preferably a number of carbon atoms, equal to 55.

Conveniently, the nano-particles 4 of carbon-based material may comprise, and preferably be made up of a disordered aggregate of nano-clusters of carbon-based material. Advantageously, therefore, the nano-particles 4 of carbon-based material can have a polycrystalline and/or para-crystalline structure. In particular, therefore, the nano-particles can have no long-term order, that is, the nano-clusters can aggregate in a substantially random manner.

Advantageously, the nano-particles 4 of carbon-based material can be obtained starting from a plurality of carbon-based compounds deriving from natural vegetable compounds; preferably, said natural vegetable compounds can be endowed with phytotherapeutic properties, preferably antibacterial and/or antiviral.

Conveniently said nano-particles 4 of carbon-based material can be made with a process such as that illustrated in patent application IT10201800000926, the content of which is incorporated herein by reference.

Preferably, said nano-particles 4 of carbon-based material have the following characteristics:
- dimensions ranging from about 1 to 120 nanometers;
- chemical composition: Carbon between about 95 and 99.9%, Hydrogen between about 0.1% and 5%;
- a number of OH hydroxyl groups for each nano-particle comprised between 50 and 500;
- a number of carbon nano-clusters for each nano-particle between about 200 and 25,000.

Preferably, said nano-particles 4 of carbon-based material are obtained from at least one plant species or a mixture of plant species, preferably with antioxidant and/or antimicrobial characteristics, which is sequentially subjected to:
- subcritical hydrothermal enzymatic carbonization,
- deagglomeration by ultrasonic sonication,
- clustering with high frequency pulsed electromagnetic fields, and
- dehydration.

Conveniently, the particles obtained from the dehydration step have the above characteristics.

Advantageously, the particles obtained from the dehydration step are then subjected to equalization in a hydrophilic and/or lipid solvent matrix by ultrasonic sonication.

Preferably, the plant species or the mixture of plant species, with antioxidant or antimicrobial characteristics, used is/are included in the group consisting of: *Theobroma Cacao, Vitis Vinifera, Olea Europea, Silybum Marianum, Camelia Sinensis, Cynara Scolymus, Curcuma Longa, Piper Nigrum, Allium Sativum, Saccarum Officinarum, Solanum Lycopersicum, Zingiber Officinale Roscoe, Triticum Dicoccum, Raphanus Sativus, Juniperus Cedrus, Pinus Strobus, Artemisia Judaica, Azadirachta Indica, Thujjaumis Dolabrlicata, Solus Annlicata, Cymanus Sinabrlicata, C Lycopersicum, Aristea Ecklonii, Chenopodium Ambrosioides, Diospyros Mespiliformis, Rosmarinum Officinalis, Elephantorrhiza Elephantina, Eucalyptus Camaldulensis, Gunnera Perpensa, Harpephyllum Caffrum, Hypericum Perforatum, Melianthus Comosus, Terminalia Sericolla, C. Caroliniana Willd, Arthrospira platensis, Rosa Chinensis, Coffea Arabica.*

Preferably, during the subcritical hydrothermal enzymatic carbonization step, a plant species with antioxidant and/or antimicrobial properties having a size between 0.1 and 5 mm and a mixture of thermophilic enzymes consisting of chymosin, with a % between 5 and 50%, from pepsin with a % between 10 and 70%, from proteinase with a % between 5 and 30% and from hydrogenase with a % between 5 and 50%, is subjected to a process of "subcritical hydrothermal enzymatic carbonization" in a temperature range between 25°C and 35°C and/or subcritical pressure between 90 and 300 bar and/or with a humidity between 15 and 55% and/or for a period of between 20 minutes and 10 hours;

Preferably, during the deagglomeration step by ultrasonication, the plant species with antioxidant and/or antimicrobial properties obtained from the subcritical hydrothermal enzymatic carbonization step is added to a mixture of demineralized water with a % by weight between 10 and 40% and/or Acetone with a % by weight between 10 and 60% and/or Ethanol with a % by weight between 5 and 65% and/or Etanoic Acid with a % by weight between 5 and 10% and/or is subjected to ultrasonication with ultrasounds having a frequency comprised between 20 KHZ and 100 KHz for a duration preferably comprised between 30 minutes and 6 hours.

Preferably, during the clustering step with high frequency pulsed electromagnetic fields, the mixture obtained from the deagglomeration step by sonication is subjected to a clustering process by the action of an electromagnetic field preferably with a magnetic induction power between 1000 and 5000 Gauss and/or an electromagnetic pulse frequency between 18 and 150 KHz and/or for a duration between 1 minute and 300 minutes.

Preferably, during the high pressure dehydration step, the material mixture, which was obtained from the clustering step with high frequency pulsed electromagnetic fields, is subjected to a dehydration process preferably with a temperature between 20°C and 35° C and/or a pressure between 50 and 100 bar and/or for a duration between 5 and 24 hours.

Advantageously, during the ultrasonication equalization step, the materials obtained from the high pressure dehydration step are equalized by ultrasonication, preferably with a frequency between 10 KHz and 50 KHz and/or for a period between 2 hours and 16 hours and/or with a base for hydrophilic cosmetic and/or dermocosmetic use preferably having a % by weight between 95 and 99.9% and/or consisting of demineralized water with a relative % between 95 and 99.9% , and/or PVP (Polyvinylpyrrolidone), with a relative % between 5 and 90%, and/or BG (Butylene Glycol) with a relative % between 50 and 80% and/or PG (Propylene Glycol) with a relative % between 70 and 95%; or with a lipophilic base for cosmetic and dermocosmetic use preferably having a % by weight between 95 and 99%, consisting of squalene and/or olive oil with a relative % between 95 and 99% and/or from Coconut Oil with a relative % between 80 and 99% and/or from Avocado Oil with a relative % between 85 and 99% and/or Sweet Almond Oil with a relative % between 70 and 99% and/or Cocoa Butter with a relative % between 60 and 99%; or with a base for hydrophilic food supplements preferably having a % by weight between 80 and 99.9%, consisting of demineralized water with a relative % between 80 and 99.9% and/or apple juice with a relative % between 85 and 99.9% and/or from pineapple juice with a relative % between 70 and 99 and/or, from mango juice with a relative % between 20 and 40% and/or from blueberry juice with a relative % between 85 and 99.9% and/or from pomegranate juice between 80 and 99% and/or from grapes juice with a relative % between 50 and 99% and/or from tomato juice with a relative % between 80 and 99%; or with a base for lipophilic food supplements preferably having a % by weight between 90 and 99.9%, consisting of Olive Oil with a relative % between 90 and 99.9% and/or Olive oil Coconut with a relative % between 70 and 99% and/or from Avocado Oil with a relative % between 75 and 99% and/or from Linseed Oil with a % between 90 and 99% and/or from Rice Oil with a relative % between 75 and 99.9% and/or from Grapeseed Oil with a relative % between 90 and 99% and/or from Seed Oil Peanut with a relative % between 80 and 99% and/or from Wheat Germ Oil with a relative % between 5 and 25% and/or from Sunflower Oil with a relative % between 5 and 35% and/or from Macadamia Oil with a relative % between 10 and 30%.

In particular, the nano-particles 4 of carbon-based material can be made with the following process. The starting natural plant and/or animal species are subjected to a subcritical hydrothermal carbonization process during which most of the functional groups are removed from the constituent molecules of said plant compounds, in order to leave only the carbonaceous skeletons of the molecules themselves. Preferably, said carbonization process can be carried out in the presence of humidity. Preferably, said carbonization process can take place in the presence of thermophilic enzymes, for example chymosin, pepsin, hydrogenase, or proteinase or other enzymes suitable for the cleavage of chemical bonds.

Advantageously, the product of the carbonization process can be subjected to a deagglomeration step, preferably by sonication. In particular, during the deagglomeration phase the products themselves are subjected to a sonication treatment, preferably by ultrasound, in a bath of solvents, which can be organic or inorganic, polar or apolar. During this deagglomeration phase any agglomerates present in the product, which is obtained from the carbonization process, can be flaked in order to substantially obtain powders of micro and/or nanometric dimensions.

Advantageously, the powders obtained from the deagglomeration phase can then be subjected to an agglomeration/massing phase (i.e. clustering), in particular by irradiation with electromagnetic fields, preferably pulsed, and preferably in the radio-frequency range. In particular, during the agglomeration/massing phase carried out by irradiation, the powders obtained from the deagglomeration phase are aggregated/massed (clustered), thus forming agglomerates, preferably ordered, of micro and/or nanometric dimensions. In particular, the agglomerates thus obtained constitute said nano-particles 4 of carbon-based material.

Advantageously, the agglomerates thus obtained from said agglomeration/massing phase can be subjected to a dehydration phase, in order to remove any traces of solvent which may have remained trapped inside the agglomerates, or which can be chemically bonded or adsorbed. outside of the latter.

Advantageously, the agglomerates thus obtained - and preferably dehydrated - can be subjected to an equalization step, preferably by sonication inside a suitable medium and/or solvent, such as for example a mixture of one or more of the following components: distilled water and/or deionized, Polyvinylpyrrolidone, Butylene Glycol, Propylene Glycol, in order to allow a substantially homogeneous distribution of said agglomerates within the medium and/or solvent itself.

Conveniently, the product 1 consists exclusively (i.e. without the addition of further materials or coatings or treatments) of said at least one fabric layer 2 in which said nano-particles 4 of carbon-based material obtained with a process as described above and/or corresponding to the material obtained with the process illustrated in patent application IT10201800000926.

The laminar product 1 is obtained by applying, on said at least one layer 2 of fabric, the nano-particles 4 of carbon-based material by means of a process of immersion coating 3 (i.e. *"dip coating")* and, in particular by immersing the layer 2 in a tank 13 containing a solution 14 of said nano-particles 4 of carbon-based material, suitably followed by a subsequent extraction and drying.

More in detail, said process 3 comprises a step of immersion/insertion of the layer 2 into the solution containing said nano-particles 4 of carbon-based material, a step in which the layer 2 remains immersed inside the solution 14 to thus allow the deposit of said particles on the layer, and an extraction step in which the layer 2 is extracted from the solution.

Advantageously, the nano-particles 4 of carbon-based material can be dispersed in a suitable solvent, preferably distilled and/or deionized water, with a concentration of about 0.5 - 5 g/L, preferably of about 1.8 g/L Preferably, therefore, the nano-particles 4 of carbon-based material are dispersed in an aqueous solution 14.

Preferably, the solution 14 for dipping the fabric 2 is prepared as follows: first the nano-particles 4 of carbon-based material are inserted/positioned in the dry and clean immersion tank 13 and, subsequently, said tank is filled with water, preferably at room temperature. Conveniently, the solution 14 thus prepared is mixed and homogenized until the complete dissolution of said particles 4 inside the aqueous solvent. Preferably, the immersion solution 14 comprises about 0.1-8% (by weight of water) of nano-particles 4 of carbon-based material, and the remaining part of water.

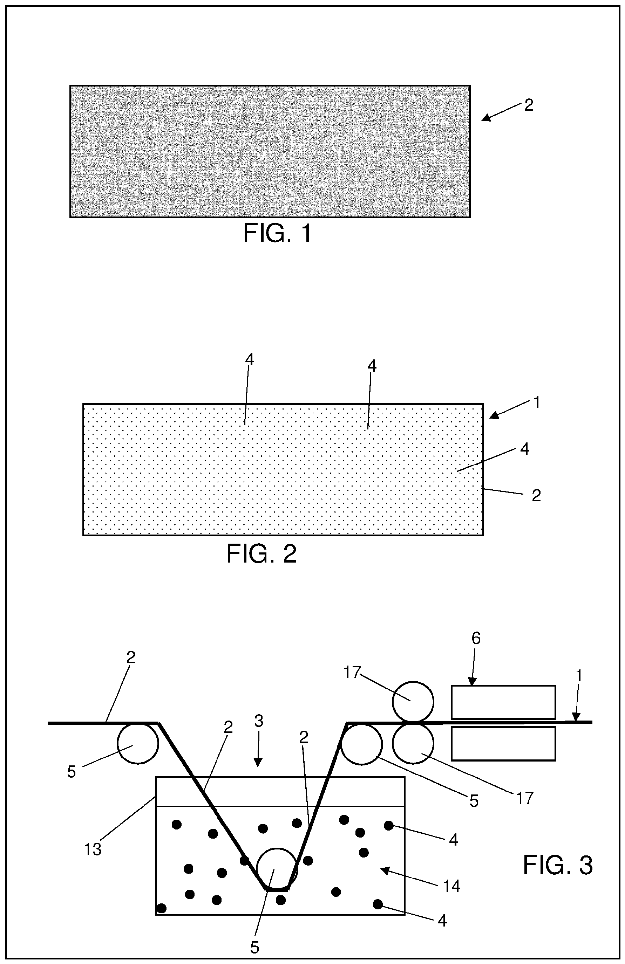

Advantageously, the fabric layer 2 (preferably supplied in reels) can be immersed inside the tank 13, containing the nano-particles 4 in aqueous solution 14, for example continuously (*roll-to-roll* process), making it advance by means of rollers 5, as shown in Figure 3. Advantageously, the advancement speed of the layer 2 inside the immersion tank 13 can be such that each portion of the layer 2 remains immersed in the solution 14 contained in said tank for a time preferably at least about 10 seconds per linear meter of said layer; for example, the advancement speed of the layer 2 inside the tank 13 can be equal to at least about 0.1 m/s.

Conveniently, the layer 2 on which the nano-particles 4 of carbon-based material have been deposited, and leaving the immersion tank 13, then passes inside a drying station 6, preferably configured to cause evaporation of the aqueous solvent. Preferably, the drying station 6 is configured to dry, with hot air (through a tunnel) or by indirect heat, the layer 2 on which the nano-particles 4 of carbon-based material have been applied/deposited, thus obtaining the laminar product 1. Preferably, the drying temperature is about 80-180°C, or in any case it is compatible with the heat resistance of the fabric of layer 2; suitably, the drying step lasts for the time necessary to cause the complete drying of the layer 2 on which the nano-particles 4 of carbon-based material have been deposited.

Advantageously, upstream of the drying station 6, the passage of the layer 2 - on which the nano-particles 4 of carbon-based material have been deposited, and leaving the immersion tank 13 - can be provided through at least a pair of overlapping squeezing/pressing rollers 17 (preferably three pairs of rollers) configured to remove excess aqueous solution.

Conveniently, by adjusting the rotation speed of the feed rollers 5 and squeezing rollers 17, the excess aqueous solution 14 containing the nano-particles 4 of carbon-based material is recovered from the layer 2 leaving the tank 13.

Advantageously, the product 1 thus obtained can be washed without removing the nano-particles 4 from the layer 2, and thus allowing the product to be reused several times.

Conveniently, moreover, the inclusion in the layer 2 of nano-particles 4 of carbon-based material carries out a bacteriostatic and/or bactericidal action, thus making the product 1 particularly suitable for defining a valid barrier against microorganisms, such as bacteria, as well as of dust and particulate matter.

Conveniently, moreover, the product 1 is also resistant to abrasion, resistant to perforation, electrostatic, water-repellent, elastic, thermally insulating and electrically conductive.

Conveniently, the product 1 is transpiring, and in particular allows the passage of air, in both directions, while filtering/retaining the particulate or microorganisms present in the air itself and having dimensions greater than 0.2 - 1.5 µm.

Advantageously, the laminar product 1 thus obtained can then be cut and/or packaged to make devices, covers for covering objects or clothing.

Conveniently, the laminar product 1 according to the invention can be used in the medical field, for the production of products such as masks, gowns or clothing in general for the hospital field, as well as sheets, linen or other sheets and coverings in general.

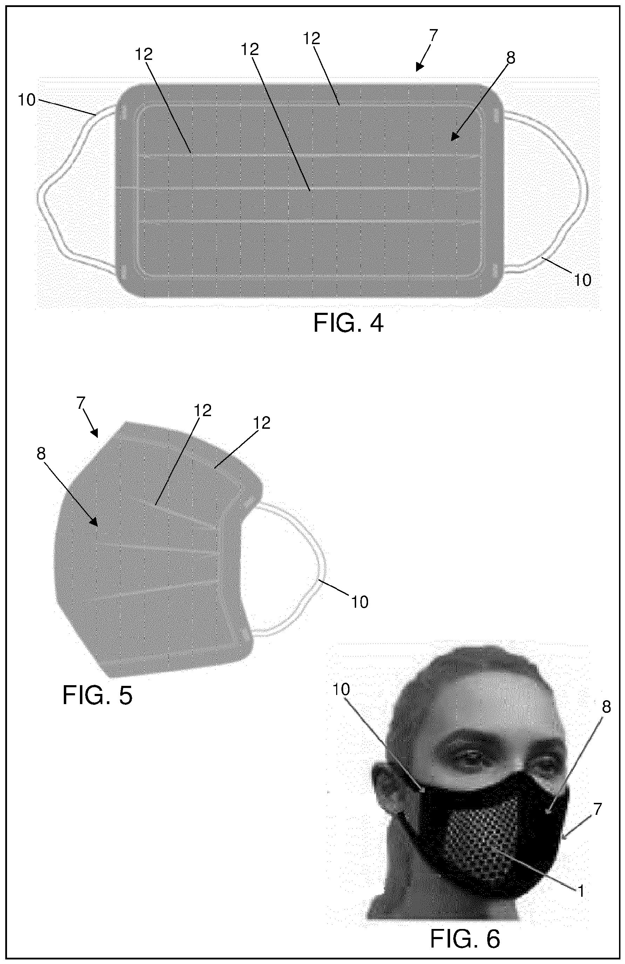

As shown in Figures 4 to 6, the laminar product 1 according to the invention can be used to make a mask 7 (also called half-mask or filtering facial device) configured to at least partially cover the face of a wearer, and in particular of the type to be applied directly on the wearer's face to cover his nose and mouth, thus protecting his respiratory tract.

Conveniently, the mask 7 comprises a portion 8, in particular with laminar development, which is configured to cover at least partially, preferably completely, the wearer's respiratory tract and which comprises a laminar product 1 according to the invention and as described above. Preferably, the mask 7 comprises a laminar portion 8 with at least one web consisting of a laminar product 1 according to the invention and as described above.

Conveniently, the portion 8 of the template 7 is made entirely and exclusively with at least one laminar product 1 according to the invention, and is therefore also substantially laminar in shape.

Conveniently, the portion 8 of the mask 7 can be made with at least one laminar product 1 according to the invention coated, coupled and/or associated - preferably by sewing, or by means of adhesives or infrared or ultrasonic welding - with another layer or multilayer of fabric.

Advantageously, the portion 8 of the mask 7 can comprise three plies, preferably sewn together, and in particular:
- a first external ply (foil) made with the laminar product 1 according to the invention or from a fabric layer (for example in cotton or polyester),
- a second intermediate web (lamina) made with the laminar product 1 according to the invention; preferably, the fabric layer 2 of the laminar product 1 of the second intermediate ply is non-woven fabric, and
- a third internal veil (foil), intended to come into contact with or be near the skin and the mouth of the wearer, made of fabric, preferably of natural fibers (for example cotton), and preferably not impregnated with said nano-particles 4 in carbon-based material.

Conveniently, the mask 7 having a portion 8 with the three plies as described above has filtering efficiency characteristics of the FFP2 type.

Advantageously, the portion 8 of the mask 7 can comprise two plies, preferably sewn together, and in particular:
- an external web (lamina) made with the laminar product 1 according to the invention; preferably, the fabric layer 2 of the laminar product 1 of this web is a non-woven fabric or a fabric obtained by weaving,
- an internal veil (foil), intended to come into contact with or be near the skin and the mouth of the wearer, made of fabric, preferably of natural fibers (for example cotton).

Conveniently, the fabric layer 2 of the product 1, with which the portion 8 is made, and/or any other plies of said portion 8, have a weft such as to prevent the passage of particles smaller than 0.2 - 1. , 5 microns.

Conveniently, when the mask 7 is not worn, the portion 8 can have a substantially flat development or can have/maintain a concave conformation (for example

Conveniently, the mask 7 according to the invention can have a shape and dimensions corresponding to any traditional mask, in which, however, the portion 8 - which is intended to cover the nose and mouth of the wearer - is made, entirely or for the most part, with the laminar product 1 according to the invention and as described above.

Preferably, the portion 8 of the mask 7 can be configured - in terms of shape and size - to extend well beyond the position of the respiratory tract (nose and mouth) of the wearer, for example in order to cover a portion of the chin and for example completely cover the nose, thus offering a more effective protection from particulates and pathogens, in general, present in the air.

Advantageously, the portion 8 can have a laminar conformation which is substantially rectangular or trapezoidal, and preferably in the shape of an isosceles trapezoid. Conveniently, in the latter case, the larger base is configured to be positioned upwards, i.e. towards the user's forehead, while the smaller base is configured to be positioned downwards and in particular to be passed underneath. the user's chin.

Advantageously, in order to better adapt to the user's face, and also to simplify its folding and therefore its storage, the portion 8 of the mask can have a plurality of seams 12 or inserts/elasticized areas to facilitate folding. Conveniently, seams 12 or inserts/elasticized areas can be obtained on the portion 8 to give a particularly ergonomic shape and favor the adherence of said portion to the face of the wearer.

Advantageously, the portion 8 can be defined by several distinct areas/zones, each preferably made at least in part with the laminar product 1 according to the invention, and joined together, for example by sewing, adhesives and/or infrared or ultrasonic welding.

Advantageously, the mask 7 also comprises at least two straps 10, preferably elasticized, which are associated with the portion 8 in correspondence with two mutually opposite areas and which are configured to be positioned/hooked behind the wearer's ears in order to maintain the portion 8 firmly in place. In particular, the ends of each tape 10 are fixed to the portion 8. Preferably, the tapes 10 are for example made of natural rubber or elastic polyester. Preferably, two straps 10 are provided which, when the mask 7 is worn, are intended to be positioned/hooked around the head respectively below and above the ears.

Advantageously, in correspondence with the area of the portion 8 of the mask 7 intended to be positioned around the nose, a nose clip portion can be provided, defined by a metal element or by a seam, in order to ensure optimal adherence of the portion 8 to the nose of the wearer, corresponding to the stretch of skin covering the nasal bones or the cartilages of the nasal septum.

The mask 7 thus obtained is particularly advantageous in that:
- is in line with the regulatory requirements for the certification of medical devices (for example the EEC Directive 93/42),
- it has antimicrobial and bacteriostatic characteristics at least against the following bacteria: *Staphylococcus aureus, Klebsiella pneumoniae, Escherichia coli* and *Bacillus subtilis;* in particular, the nano-particles 4 of carbon-based material which cover the fibers of the fabric layer 2 of the product 1, with which the portion 8 of the mask is made at least in part, is defined as a bacteriostatic and antiviral surface,
- it is foldable and, when not worn, has a small footprint,
- has an optimal conformation to adhere to the wearer's face, while ensuring maximum comfort,
- it has high filtering efficiency, at the same time, it has low breathing resistance,
- prevents the passage of particles smaller than 0.2 - 1.5 microns,
- it has features and performances that are durable and constant over time,
- it can be used in hot and humid environments,
- it has a filtering effect in both directions, and in particular it allows to protect the wearer from the surrounding environment, but also allows to protect the surrounding environment from the wearer, thus preventing the latter from spreading dangerous biological agents into the environment,
- it can be reused several times (even up to about 30 times) as it is washable, for example in the washing machine at 30°C or in a wet steam boiler without using chemicals, without losing the aforementioned characteristics and performance,
- it has *ashelf lifeof* about 5 years.

Conveniently, the mask 7 according to the invention is suitable to be used to protect the wearer's respiratory tract from particulates, dusts and volatile and non-volatile liquid particles.

More in detail, the mask 7 according to the invention is suitable to be used, for example, for:
- the protection of patients from the risk of infection during surgery or hospitalization,
- respiratory protection against contaminants, paints, solid or liquid aerosols, dusts, mists and fumes
- filtering of fine dust from urban traffic or sewage,
- filtering of fine particles and dust - such as silica, glass wool, graphite, cement, sulfur, coal, wood shavings, etc. - while carrying out DIY works and/or in various sectors (such as for example in the textile industry, crafts, carpentry, etc.),
- filtering of fine and toxic particles - such as quartz, metal shavings, molds, bacteria, etc. - for a variety of jobs in different sectors, such as in waste water treatment, waste disposal, mining, quarrying, metal processing.

In particular, unlike what is described in patents CN 106 758 231, US 7 862 624, KR 2013 0006133, US 2020/102697, US 2015/204009, CN 108 425 238, this invention exploits the antibacterial potential of innovative materials based on of carbon that have no long-range order and are simpler and cheaper to make.

The present invention has been illustrated and described in some of its preferred embodiments, but it is understood that executive variations may apply thereto in practice, without however departing from the scope of protection of the present patent for industrial invention.

## Claims

1. Laminar product (1), in particular for the production of a mask (7) for the protection of the respiratory tract, for garments, sheets and linen in general, **characterized in that** it comprises at least one layer (2) of fabric having at least a part of its fibers coated at least in part, preferably entirely, by nano-particles (4) comprising at least one nano-cluster, preferably a nano-cluster agglomerate, of carbon-based material having a face-centered cubic-type structure (*fcc*)*.*

2. Product according to claim 1, **characterized in that** said at least one carbon-based nano-cluster comprises a number of atoms, and preferably a number of carbon atoms, equal to 38 or equal to 75, or equal to 101.

3. Product according to one or more of the preceding claims **characterized in that** said at least one nano-cluster of carbon-based material has a truncated or decahedral octahedral shape, and preferably:
- said nano-clusters comprising 38 carbon atoms have a truncated octahedral shape, and/or
- said nano-clusters comprising 75 carbon atoms have the shape of a Marks' decahedron, and more preferably a Marks' decahedron with values of m, n, and p respectively equal to 2, 2 and 2, and/or
- said nano-clusters comprising 101 carbon atoms have the shape of a Marks' decahedron, and more preferably a Marks' decahedron with values of m, n, and p equal to 2, 3 and 2 respectively

4. Product according to one or more of the preceding claims **characterized in that** said at least one nano-cluster of carbon-based material comprises a number of atoms other than 55.

5. Product according to one or more of the preceding claims **characterized in that** said nano-particles (4) have no long-range order.

6. Product according to one or more of the preceding claims **characterized in that** said fabric layer (2) is impregnated with said carbon-based material nano-particles (4) in a weight percentage of about 0.1-0.8% , preferably about 0.1-0.3% by weight.

7. Product according to one or more of the preceding claims, **characterized in that** said nano-particles (4) of carbon-based material are obtained from at least one plant species or a mixture of plant species, preferably with antioxidant and/or antimicrobial characteristics, which in sequence is subjected to:
- subcritical hydrothermal enzymatic carbonization,
- deagglomeration by ultrasonic sonication,
- clustering with high frequency pulsed electromagnetic fields,
- dehydration,
- equalization in hydrophilic and/or lipid solvent matrix by ultrasonic sonication.

8. Product according to one or more of the preceding claims, **characterized in that** said nano-particles (4) of carbon-based material have the following characteristics:
- dimensions ranging from about 1 to 120 nanometers; and/or
- chemical composition with carbon of about 95 - 99.9% and hydrogen of about 0.1% - 5%; and/or
- a number of OH hydroxyl groups comprised between 50 and 500; and/or
- a number of nano-clusters of carbon-based material between about 200 and 25,000

9. Product according to one or more of the preceding claims, **characterized in that** it consists exclusively, without the addition of further materials or coatings or treatments, of said at least one fabric layer (2) having its fibers entirely covered by said nano-particles (4) of carbon-based material.

10. Product according to one or more of the preceding claims **characterized in that** said layer (2) is made of "Ring-Spun" type cotton.

11. Method for producing a laminar product (1) according to one or more of the preceding claims, **characterized in that** said nano-particles (4) of carbon-based material are applied to the fabric layer (2) by means of a "*dip coating"* process (3).

12. Method according to the previous claim, **characterized in that** said fabric layer (2) is immersed in a solution (14) in which the nano-particles (4) of carbon-based material are dispersed in a suitable solvent, preferably distilled water and/or deionized, with a concentration of about 0.5 - 5 g/L, preferably about 1.8 g/L.

13. Method according to one or more of the preceding claims, **characterized in that** said fabric layer (2) is immersed in a solution (14) containing said nano-particles (4) of carbon-based material for a time of about at least ten seconds.

14. Method according to one or more of the preceding claims, **characterized in that**, following said immersion, said fabric layer (2) with the nano-particles (4) of carbon-based material applied is dried at a temperature of about 80 -180°C.

15. Mask (7) for the protection of the wearer's respiratory tract, **characterized in that** it comprises at least a portion (8) which is configured to cover the wearer's respiratory tract, said portion comprising at least a veil made with a laminar product (1) according to one or more of claims 1 to 10 and/or which is obtained with a method according to one or more of claims 11 to 14.
